Europäisches Patentamt

**(19)** European Patent Office

Office européen des brevets

**(11)** **EP 0 544 494 B1**

**(12)** **EUROPEAN PATENT SPECIFICATION**

**(45)** Date of publication and mention
of the grant of the patent:
**29.01.1997 Bulletin 1997/05**

**(51)** Int. Cl.$^6$: **C03C 3/068**

**(21)** Application number: **92310726.2**

**(22)** Date of filing: **24.11.1992**

**(54) Optical glass and optical lens making use of the same**

Optisches Glas und optische Linse damit hergestellt

Verre optique et lentille optique l'utilisant

**(84)** Designated Contracting States:
**DE FR GB**

**(30)** Priority: **25.11.1991 JP 309325/91**

**(43)** Date of publication of application:
**02.06.1993 Bulletin 1993/22**

**(73)** Proprietor: **CANON KABUSHIKI KAISHA**
**Tokyo (JP)**

**(72)** Inventors:
- **Maruyama, Shizuo,**
  **c/o Canon Kabushiki Kaisha**
  **Ohta-ku, Tokyo (JP)**
- **Nakata, Kohei,**
  **c/o Canon Kabushiki Kaisha**
  **Ohta-ku, Tokyo (JP)**
- **Shingaki, Seiichi,**
  **c/o Canon Kabushiki Kaisha**
  **Ohta-ku, Tokyo (JP)**

**(74)** Representative: **Beresford, Keith Denis Lewis et**
**al**
**BERESFORD & Co.**
**2-5 Warwick Court**
**High Holborn**
**London WC1R 5DJ (GB)**

**(56)** References cited:
**EP-A- 0 227 269**          **US-A- 4 732 876**

- **PATENT ABSTRACTS OF JAPAN vol. 10, no. 90**
  **(C-337)8 April 1986 & JP-A-60221338**
- **PATENT ABSTRACTS OF JAPAN vol. 8, no. 138**
  **(C-231)27 June 1984 & JP-A-59 050 048**
- **PATENT ABSTRACTS OF JAPAN vol. 11, no. 315**
  **(C-451)14 October 1987 & JP-A-62100449**
- **CHEMICAL ABSTRACTS, vol. 112, no. 24, 11**
  **June 1990, Columbus, Ohio, US; abstract no.**
  **222186k, page 331 ; & JP-A-1286934**

**Description**

BACKGROUND OF THE INVENTION

Field of the Invention

The present invention relates to the optical glass having a high refractive index, a high Abbe's number and a low yield point temperature, suited for precision press molding.

Related Background Art

The glass species such as SSK and LaK named in Schot Catalogue are known to have optical constants of a refractive index $n_d$ of 1.65 to 1.75 and an Abbe's number $v_d$ of 50 or more. The glass with a high refractive index and small color dispersion is indispensable for making up optical image formation systems comprised of a plurality of lenses which are used in cameras and video cameras. Further, when the glass of this type is used for aspheric lenses it is possible to make up image formation systems with fewer lenses.

However, because of a high cost and low efficiency of the aspheric lens production by conventional grinding abrasion methods, recently a precision press molding technique has been energetically developed, in which a softened glass material is press-molded to make lenses. This method is an epoch-making process suited for mass-production of precision optical devices such as lenses, but the high molding temperature deteriorates the surfaces of molds used for the molding. Therefore It requires frequent reprocess of the molds, raising the cost of the products. Moreover, when the operation temperature becomes 600°C or above during the precision press molding, the durability of mold materials drastically falls and also the operation efficiency becomes poor. Hence, the precision press molding should be carried out at temperature lower than 600°C by lowering the glass softening temperature.

In general, a glass material with a relatively high refractive index and small color dispersion, having optical constants of a refractive index $n_d$ of 1.65 to 1.75 and an Abbe's number $v_d$ of 50 or more, has a high glass yield point temperature and the precision press molding of such glass is relatively difficult since phenomenons such as fusion to molds and cracking of glass tend to occur during the molding.

As an example of glass materials having a low softening point, the glass comprising $B_2O_3$-$La_2O_3$-$ZnO$-$Li_2O$-$Sb_2O_3$ is proposed in Japanese Laid-Open Patent Application No. 62-100449 as a part of composition.

In the precision press molding carried out at high temperatures, however, $Sb_2O_3$, though not problematic when contained in a very small amount in the glass composition, vaporizes when contained in an amount of several % or more, and causes haze development on the surface of the mold or the surface of the press-molded glass, or reacts with mold materials on the surface of the mold lowering the durability of the mold.

In order to give the glass a low softening point, it is common to add an alkali metal oxide such as $Li_2O$ in the composition. In the case of glasses with a high refractive index and a small color dispersion, however, the addition of the alkali metal oxide in a large quantity deteriorates the chemical durability of the glass and also makes it difficult to maintain optical performance.

A glass which consists of 8-30 weight % $SiO_2$, 2-17 weight % $B_2O_3$, 1-40 weight % $La_2O_3$, and 1-10 weight % ZrO as essential components and 0-15 weight % ZnO and 0-3 weight % LiO as optional components is disclosed in Japanese patent publication 84-110259 (Ohara Kogaka Glass). The glass is stated to have a refractive index of 1.70-1.95 and an Abbe's number of 25-50. However the moulding of a lens directly from softened glass is not disclosed in this reference.

The present invention provides a method for forming an optical lens, which comprises heating optical glass to a softened state and forming the softened glass into an optical lens by precision press moulding, the optical glass being as defined in claim 1 or claim 4 of the accompanying claims.

The optical glass of the present invention, having the composition of an $SiO_2$-$ZrO_2$-$B_2O_3$-$La_2O_3$-$ZnO$-$Li_2O$ system has advantages of a glass material with a high refractive index and a small color dispersion, having superior chemical durability and a low softening point.

BRIEF DESCRIPTION OF THE DRAWINGS

Fig. 1 cross-sectionally illustrates the disposition of a mold and a glass material before press molding in molding experiments of the present invention.

Fig. 2 cross-sectionally illustrates a mold and a glass material molded into lens after press molding.

Fig. 3 illustrates a temperature schedule in the press molding.

## DESCRIPTION OF THE PREFERRED EMBODIMENTS

The components of the optical glass according to the present invention are defined above for the following reasons.

$SiO_2$ is a component that constitutes a glass network and is effective in improving chemical durability and preventing devitrification. However, its use in an amount less than 5% by weight can not give the above effects sufficiently, and its use in an amount more than 25% by weight may cause the rise of yield point temperature making it difficult to obtain the desired optical performance. The yield point means as follows: A thermal expansion curve is obtained by accurately measuring the elongation and temperature of a sample glass rod of 50 mm in length and 4 mm in diameter, sufficiently annealed, wherein the rod is uniformly heated to give temperature rise at a constant rate of 4°C per minute, with a load of 50 g applied to the glass rod in its axial direction. According to the thermal expansion curve thus obtained, as the temperature rises the elongation of the sample apparently stops and then starts the shrinkage, because of deformation of the rod due to the softening of glass. The point of inflection at which the expansion (elongation) apparently turns to the shrinkage is the yield point.

$B_2O_3$ also constitutes a glass network like $SiO_2$, and is effective as a color dispersion decreasing component when used in an amount of 16% by weight or more. However, when used in an amount more than 40% by weight it may cause a poor chemical durability and increase the tendency of devitrification of the glass.

In order to maintain the stability and low color dispersion properties (Abbe's number: 50 or more) of the glass, the total weight of $SiO_2$ and $B_2O_3$ must be 30% by weight or more. In order to maintain the low-softening properties and high refractive index ($n_d$: 1.65 or more), the total weight of $SiO_2$ and $B_2O_3$ must be not more than 50% by weight.

Herein, Abbe's number $\nu_d$ is defined by the following equation:

$$\nu_d = (n_d\text{-}1)/(n_F\text{-}n_C)$$

wherein $n_d$, $n_F$ and $n_C$ relate to refractive indices of an optical material with respect to sodium d line (587.56 nm), hydrogen F line (486.13 nm) and hydrogen C line (656.28 nm), respectively. A small Abbe's number represents a large difference in refractive index for different wavelengths, i.e., a large color dispersion, and a large Abbe's number represents the reverse.

$Li_2O$, when used as an essential component, can dramatically lower the yield point temperature of the glass to provide good melt properties. In particular, in order to control the yield point temperature to be 560°C or below, this component must be used in an amount of 2% by weight or more. Use of $Li_2O$ in excess, however, may cause adverse effects, such as poor chemical durability, too large thermal expansion coefficient and loss of desired optical constants. Hence, the maximum is 8% by weight.

$Na_2O$, $K_2O$ and $Cs_2O$ are remarkably effective in lowering the yield point temperature, like $Li_2O$. However, their use in an amount more than 10% by weight each and in an amount more than 15% by weight in total can bring about no desired optical constants.

MgO is effective in stabilizing the glass. However, its use in an amount more than 10% by weight can bring about no desired optical constants.

CaO, SrO and BaO are effective in obtaining the desired optical constants and also for stabilizing the glass. However, use of CaO and SrO in an amount more than 30% by weight each and BaO in an amount more than 20% by weight may result in a poor chemical durability and an increase in the tendency of devitrification of the glass.

ZnO is greatly effective in improving chemical durability of the glass and in stabilizing the glass, and also effective in lowering the yield point temperature. In order to attain these effects, ZnO must be used in an amount of 1% by weight at least. On the other hand, because of a strong tendency toward color dispersion increase of optical performance of the glass, this component should be used within an amount of 20% by weight.

However, use of CaO, SrO, BaO and ZnO in an amount more than 40% by weight in total may cause poor chemical durability and increase the tendency of devitrification, and their use in an amount less than 5% by weight can not bring about satisfactory effects.

$Al_2O_3$ is effective in improving chemical durability, but its use in an amount more than 10% by weight may result in a higher yield point temperature of the glass.

$ZrO_2$ is remarkably effective in preventing the phenomenon of devitrification of the glass and for improving chemical durability, and is an essential component in the present invention. However, its use in an amount less than 0.5% by weight can not bring about the intended effects. On the other hand, its use in an amount more than 15% by weight may bring about adverse effects such that no desired optical constants can be obtained, the yield point temperature of the glass becomes higher and the phenomenon of devitrification tends to occur.

$La_2O_3$ is a component essential to the glass with a high refractive index and a small color dispersion as in the present invention, and must be used in an amount of 22% by weight at least. Its use in an amount more than 40% by weight, however, makes it very difficult to prevent devitrification of the glass.

In addition to the foregoing components, the optical glass of the present invention may incorporate appropriate amounts of SnO, $Y_2O_3$, $Yb_2O_3$, $In_2O_3$, $Gd_2O_3$, $Ga_2O_3$, $WO_3$, $GeO_2$, $Nb_2O_5$, $Ta_2O_5$, PbO and so forth for the purposes of controlling optical performance, improving melt properties and improving chemical durability, so long as they do not deviate the object of the present invention. Very small amount of $Sb_2O_3$, can be used as a clarifier as long as it would not cause problems due to its vaporization during the molding of the optical lens by precision press molding.

In view of prevention of the tendency of devitrification, the following composition is more preferable for the optical glass of the present invention.

| Components | Content (% by weight) |
|---|---|
| $SiO_2$ | 5 to 20 |
| $B_2O_3$ | 20 to 35 |
| provided that $SiO_2 + B_2O_3$ = 30 to 45 | |
| $Li_2O$ | 2 to 7 |
| $Na_2O$ | 0 to 5 |
| $K_2O$ | 0 to 5 |
| $Cs_2O$ | 0 to 5 |
| provided that $Na_2O + K_2O + Cs_2O$ = 0 to 10 | |
| MgO | 0 to 5 |
| CaO | 0 to 15 |
| SrO | 0 to 15 |
| BaO | 0 to 15 |
| ZnO | 2 to 12 |
| provided that $CaO + SrO + BaO + ZnO$ = 5 to 20 | |
| $Al_2O_3$ | 0 to 10 |
| $ZrO_2$ | 1 to 10 |
| $La_2O_3$ | 25 to 35 |
| provided that $Si_2O + ZrO_2$ = 10 to 25 | |

EXAMPLES

Examples of the present invention will be described below with reference to the drawings.

First, Table 1 (1A-1C) shows composition (in % by weight in the table), refractive index ($n_d$), Abbe's number ($v_d$), yield point temperature (At) and water resistance of 13 kinds of glass according to Examples 1 to 10 and Comparative Examples 1 to 3 each.

Each glass material was prepared from components each comprising of oxide, carbonate and nitrate form. The amounts of the components were calculated to give 250 ml of the glass of the desired composition. The mixtures thus prepared were each premixed well to be homogeneous, and melted at 1,000 to 1,300°C for about 3 hours using a 300 ml-platinum crucible, followed by stirring with a platinum rod to homogenate the glass. After clarification, the molten glass was poured into preheated carbon molds, and glass blocks thus obtained were then annealed. In order to confirm the properties of the glass, a small piece was cut out from the glass block thus produced for testing, and their refractive index ($n_d$), Abbe's number ($v_d$), yield point temperature (At) and water resistance were measured. The water resistance was evaluated in the following way according to the Japan optical glass industrial standard (JOGIS): Glass was pulverized into 420 to 590 $\mu$m in size and a portion corresponding to glass gravity $\times$ 1 g was put in an eluting basket made of platinum, which was then put in pure water contained in a round flask of quartz glass, carrying out treatment in a boiled water bath for 60 minutes. After the treatment, weight loss (%) of the powdered glass was calculated.

Next, each glass block was cut and worked into glass balls (glass materials) for precision press molding. The resulting glass balls were each finished to have a surface roughness Rmax of 0.01 $\mu$m or less. This surface roughness was measured using MAXIM Surface Profile Analyzer, manufactured by Zygo Co., for each ball measuring 10 spots of 0.2

4

× 0.2 mm.

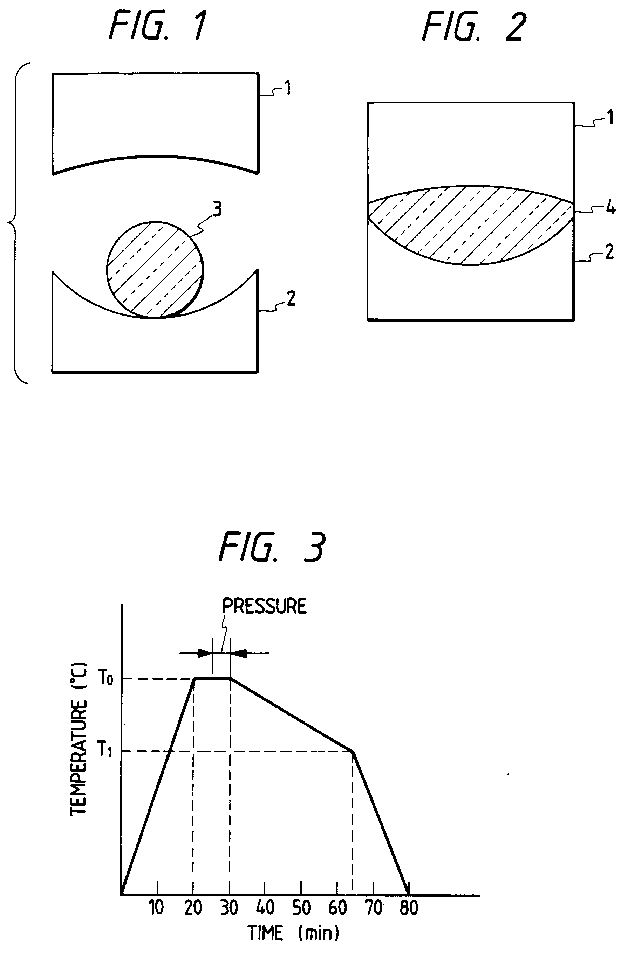

For the glass balls thus produced, molding experiments were carried out using the molds of No. 1-47 shown in Table 2. Fig. 1 is a view to show the glass-mold disposition before molding. In the drawing, reference numeral 1 denotes an upper mold; 2, a lower mold; and 3, a glass ball. The upper mold 1 and lower mold 2 were processed to have the Rmax in a precision of 0.01 μm or less. In the experiments, the same materials were used in the upper mold 1 and lower mold 2.

The molding was carried out in the following way: First, the glass ball 3 was set on the lower mold 2 and, after the inside of a molding machine was evacuated to $10^{-2}$ Torr or less, nitrogen gas was fed to provide a nitrogen gas atmosphere in the case when the molds are made of non-oxide materials, or, in the case when they contain oxides, nitrogen gas and oxygen gas were fed to provide a nitrogen-oxygen mixed gas atmosphere so as to have a constant oxygen partial pressure. Thereafter, the glass and mold were heated according to the schedule as shown in Fig. 3. After the temperature reached a given molding temperature ($T_0$), the glass and mold were maintained for 5 minutes as they were. Then, as shown in Fig. 2, the upper mold 1 was pressed at a pressure of 100 kg/cm$^2$ for 5 minutes to carry out pressure molding. After the pressure molding was completed and the pressure was removed, cooling was carried out at a cooling rate of -5°C/min to a temperature ($T_1$) lower by 50°C than the transition temperature of the glass and thereafter at a cooling rate of -20°C/min or higher, and a lens-shaped glass sample 4 was taken out at a temperature of 200°C or below. To provide constant conditions for molding the glass having different compositions, the molding was carried out at a temperature corresponding to a viscosity of $10^{9.5}$ poises for each glass. The molding experiments were carried out 10 to 100 times for each glass-mold combination.

As a result the glass having the composition of Comparative Example 1 caused serious deterioration of mold surfaces because of a higher molding temperature when carbide type or metal type mold materials were used. The glass having the composition of Comparative Example 2 caused haze on mold surfaces and lens surfaces because of the volatile components of the glass. With the glass having the composition of Comparative Example 3, occurrence of haze on lens surfaces and deterioration of mold surfaces were seen. On the other hand, the glass having one of the compositions of Examples 1 to 10 did cause neither the haze on mold surfaces and lens surfaces, nor deterioration of mold surfaces and fusion of glass to mold, with which excellent molding could be carried out.

Table 1A

| Example: | 1 | 2 | 3 | 4 | 5 |
|---|---|---|---|---|---|
| Composition: | | | | | |
| $SiO_2$ | 17.2 | 5.9 | 18.1 | 16.2 | 15.6 |
| $B_2O_3$ | 25.1 | 33.4 | 26.4 | 23.8 | 22.9 |
| $Li_2O$ | 5.5 | 5.8 | 5.7 | 5.2 | 5.0 |
| $Na_2O$ | - | - | - | - | - |
| $K_2O$ | - | - | - | - | - |
| $Cs_2O$ | - | - | - | - | - |
| $Al_2O_3$ | - | - | - | | - - |
| MgO | - | - | - | - | - |
| CaO | 17.6 | 1.7 | 17.7 | 10.6 | 16.7 |
| SrO | - | - | - | - | - |
| ZnO | 1.0 | 7.5 | 2.2 | 12.4 | 9.1 |
| BaO | - | 3.2 | - | - | - |
| $La_2O_3$ | 32.2 | 33.5 | 25.2 | 30.5 | 29.4 |
| $ZrO_2$ | 1.4 | 9.0 | 4.7 | 1.3 | 1.3 |
| $Sb_2O_3$ | - | - | - | - | - |
| Other | - | - | - | - | - |
| $n_d$: | 1.6771 | 1.7063 | 1.6745 | 1.6786 | 1.6801 |
| $\nu_d$: | 54.2 | 51.8 | 54.2 | 54.5 | 52.6 |
| At(°C): | 555 | 544 | 546 | 540 | 530 |
| Water resistance: | | | | | |
| | 0.06 | 0.04 | 0.05 | 0.07 | 0.03 |

Table 1B

| Example: | 6 | 7 | 8 | 9 | 10 |
|---|---|---|---|---|---|
| Composition: | | | | | |
| $SiO_2$ | 14.0 | 5.7 | 16.2 | 11.0 | 5.4 |
| $B_2O_3$ | 20.9 | 32.2 | 22.1 | 22.0 | 34.4 |
| $Li_2O$ | 3.7 | 4.7 | 2.2 | 4.8 | 4.8 |
| $Na_2O$ | 1.5 | 2.0 | 3.6 | - | - |
| $K_2O$ | - | - | 3.3 | - | - |
| $Cs_2O$ | 3.4 | - | - | - | - |
| $Al_2O_3$ | - | - | - | 6.7 | - |
| MgO | - | 0.5 | - | - | 5.0 |
| CaO | 15.8 | - | 12.2 | 12.7 | - |
| SrO | - | - | - | 3.8 | - |
| ZnO | 8.6 | 7.4 | 2.0 | 8.8 | 3.4 |
| BaO | - | 1.5 | 3.5 | - | 3.3 |
| $La_2O_3$ | 27.9 | 32.7 | 29.4 | 24.4 | 34.5 |
| $ZrO_2$ | 4.2 | 13.3 | 5.5 | 5.8 | 9.2 |
| $Sb_2O_3$ | - | - | - | - | - |
| Other | - | - | - | - | - |
| $n_d$: | 1.6772 | 1.7145 | 1.6716 | 1.6850 | 1.7085 |
| $\nu_d$: | 50.0 | 50.1 | 52.2 | 51.0 | 52.5 |
| At(°C): | 528 | 544 | 543 | 505 | 560 |
| Water resistance: | | | | | |
| | 0.04 | 0.04 | 0.06 | 0.03 | 0.05 |

Table 1C

| Comparative Example: | 1 | 2 | 3 |
|---|---|---|---|
| Composition: | | | |
| $SiO_2$ | 12.7 | 24.5 | 2.0 |
| $B_2O_3$ | 23.6 | 24.5 | 27.5 |
| $Li_2O$ | - | 6.0 | 1.5 |
| $Na_2O$ | - | - | - |
| $K_2O$ | - | - | - |
| $Cs_2O$ | - | - | 1.0 |
| $Al_2O_3$ | - | 1.0 | - |
| MgO | - | 4.0 | 11.0 |
| CaO | - | - | $GeO_2$ |
| SrO | - | - | 14.0 |
| ZnO | - | 13.5 | $HfO_2$ |
| BaO | 49.1 | 1.0 | 9.0 |
| $La_2O_3$ | 13.4 | 20.0 | 30.5 |
| $ZrO_2$ | 1.2 | - | - |
| $Sb_2O_3$ | - | 2.5 | 3.5 |
| Other | - | $Nb_2O_5$ 3.0 | - |
| $n_d$: | 1.6756 | 1.6511 | 1.6965 |
| $v_d$: | 55.7 | 53.2 | 52.5 |
| At(°C): | 640 | 539 | 607 |
| Water resistance: | | | |
| | 0.51 | 0.35 | 0.12 |

## Table 2

| No. | Mold substrate | Interlayer | Surface film |
|---|---|---|---|
| 1 | HM* (WC) | None | None |
| 2 | HM* (WC) | Titanium | TiN |
| 3 | HM* (WC) | None | AmC-H film** |
| 4 | SiC | None | AmC-H film** |
| 5 | SiN | None | AmC-H film** |
| 6 | SiC | CVD SiC | AmC-H film** |
| 7 | SiN | CVD SiC | AmC-H film** |
| 8 | SiC | CVD SiC | Hard carbon film |
| 9 | HM* (WC) | Sintered diamond | AmC-H film** |
| 10 | SiC | Sintered diamond | AmC-H film** |
| 11 | SiN | Sintered diamond | AmC-H film** |
| 12 | HM* (WC) | WC + AmC-H** | AmC-H film** |
| 13 | SiC | WC + AmC-H** | AmC-H film** |
| 14 | AlN | AlC | AmC-H film** |
| 15 | Cermet (TiN+TiC+Cr$_2$O$_3$) | Cermet + AmC-H** | AmC-H film** |
| 16 | Cermet (TiN+TiC+Al$_2$O$_3$) | Cermet + AmC-H** | AmC-H film** |
| 17 | HM* (WC+TiC) | None | Sintered diamond |
| 18 | HM* (WC) | None | Sintered diamond |

\* Hard metal

\*\* Amorphous-carbon hydride film

Table 2 (cont'd)

| No. | Mold substrate | Interlayer | Surface film |
|---|---|---|---|
| 19 | HM* (WC) | None | Pt + SiC |
| 20 | HM* (WC) | None | Pt + TiC |
| 21 | SiC | None | Pt + SiC |
| 22 | SiC | None | Pt + TiC |
| 23 | HM* (WC) | Tungsten; W-B | Boron nitride |
| 24 | SiC | Titanium; Ti-B | Boron nitride |
| 25 | SiN | Tantalum; Ta-B | Boron nitride |
| 26 | HM* (WC) | None | WC + TiC*** |
| 27 | HM* (WC) | Aluminum | AlN |
| 28 | HM* (WC) | Titanium | AlN |
| 29 | $Al_2O_3$ | None | Chromium oxide |
| 30 | HM* (WC) | None | Tantalum oxide |
| 31 | HM* (WC) | TiC | Hard carbon film |
| 32 | HM* (WC) | $TCr_3C_2$ | Hard carbon film |
| 33 | HM* (WC) | Hafnium carbide | Hard carbon film |
| 34 | HM* (WC) | Boron carbide | Hard carbon film |
| 35 | HM* (WC) | None | CVD WC |
| 36 | HM* (WC) | None | Pt-Ir-Os |
| 37 | HM* (WC) | TiC | Boron nitride |

\* Hard metal

\*\* Amorphous-carbon hydride film

\*\*\* Double carbide

Table 2 (cont'd)

| No. | Mold substrate | Interlayer | Surface film |
|---|---|---|---|
| 38 | HM* (WC) | TiN | AlN |
| 39 | SiC | Cr-Al-N; Cr-N | $Cr_3C_2$ |
| 40 | SiC | Cr-Al-N | $Cr_3C_2$ |
| 41 | HM* (WC) | None | Pt-Ir-Os |
| 42 | Cermet $(TiN+TiC+Al_2O_3)$ | None | Pt-Ir-Os |
| 43 | Cermet $(TiN+TiC+Cr_2O_3)$ | None | Pt-Ir-Os |
| 44 | Cermet $(TiN+TiC+Al_2O_3)$ | None | Pt-Ta-Re |
| 45 | Cermet $(TiN+TiC+Cr_2O_3)$ | None | Pt-Ir-Re |
| 46 | Stainless steel | None | Pt-Ir-Os |
| 47 | Stainless steel | None | Rh-Au-W |

* Hard metal

## Claims

1. A method for forming an optical lens, which comprises heating optical glass to a softened state and forming the softened glass into an optical lens by precision press moulding, wherein the optical glass includes the following components in the following amounts

| Components | Content (% by weight) |
|---|---|
| SiO$_2$ | 5 to 25 |
| B$_2$O$_3$ | 16 to 40 |
| provided that SiO$_2$ + B$_2$O$_3$ = 30 to 50 | |
| Li$_2$O | 2 to 8 |
| Na$_2$0 | 0 to 10 |
| K$_2$O | 0 to 10 |
| Cs$_2$O | 0 to 10 |
| provided that Na$_2$0 + K$_2$O + Cs$_2$O = 0 to 15 | |
| MgO | 0 to 10 |
| CaO | 0 to 30 |
| SrO | 0 to 30 |
| BaO | 0 to 20 |
| ZnO | 1 to 20 |
| provided that CaO + SrO + BaO + ZnO = 5 to 40 | |
| Al$_2$O$_3$ | 0 to 10 |
| ZrO$_2$ | 0.5 to 15 |
| La$_2$O$_3$ | 22 to 40 |

2. The method for forming an optical lens according to claim 1, wherein the optical lens has optical constants of a refractive index $n_d$ of from 1.65 to 1.75 and Abbe's number $v_d$ of not less than 50.

3. The method for forming an optical lens according to claim 1 or 2, wherein the optical lens has a yield point temperature of not higher than 560°C.

4. A method for forming an optical lens which comprises heating optical glass to a softened state and forming the softened optical glass into an optical lens by precision press moulding, wherein the optical glass includes the following components in the following amounts

| Components | Content (% by weight) |
|---|---|
| $SiO_2$ | 5 to 20 |
| $B_2O_3$ | 20 to 35 |
| provided that $SiO_2 + B_2O_3$ = 30 to 45 | |
| $Li_2O$ | 2 to 7 |
| $Na_2O$ | 0 to 5 |
| $K_2O$ | 0 to 5 |
| $Cs_2O$ | 0 to 5 |
| provided that $Na_2O + K_2O + Cs_2O$ = 0 to 10 | |
| MgO | 0 to 5 |
| CaO | 0 to 15 |
| SrO | 0 to 15 |
| BaO | 0 to 15 |
| ZnO | 2 to 12 |
| provided that $CaO + SrO + BaO + ZnO$ = 5 to 20 | |
| $Al_2O_3$ | 0 to 10 |
| $ZrO_2$ | 1 to 10 |
| $La_2O_3$ | 25 to 35 |
| provided that $Si_2O + ZrO_2$ = 10 to 25 | |

5. A method for as claimed in any of claims 1 to 4, which comprises press moulding the glass at a temperature of not more than 600°C.

6. A method according to claim 5, wherein the moulding employed has a surface roughness R max of 0.01 $\mu$m or less.

**Patentansprüche**

1. Verfahren zum Formen einer optischen Linse, welches das Erhitzen von optischem Glas zu einem erweichten Zustand und das Formen des erweichten Glases in eine optische Linse durch Präzisions-Formpreßverfahren umfaßt, wobei das optische Glas die folgenden Bestandteile in den folgenden Mengen enthält:

| Bestandteile | Gehalt (Gew.-%) |
|---|---|
| $SiO_2$ | 5 bis 25 |
| $B_2O_3$ | 16 bis 40 |
| mit der Maßgabe, daß $SiO_2 + B_2O_3$ = 30 bis 50 | |
| $Li_2O$ | 2 bis 8 |
| $Na_2O$ | 0 bis 10 |
| $K_2O$ | 0 bis 10 |
| $Cs_2O$ | 0 bis 10 |
| mit der Maßgabe, daß $Na_2O + K_2O + Cs_2O$ = 0 bis 15 | |
| MgO | 0 bis 10 |
| CaO | 0 bis 30 |
| SrO | 0 bis 30 |
| BaO | 0 bis 20 |
| ZnO | 1 bis 20 |
| mit der Maßgabe, daß CaO + SrO + BaO + ZnO = 5 bis 40 | |
| $Al_2O_3$ | 0 bis 10 |
| $ZrO_2$ | 0,5 bis 15 |
| $La_2O_3$ | 22 bis 40 |

2. Verfahren zum Formen einer optischen Linse nach Anspruch 1, wobei die optische Linse als optische Konstanten einen Brechungsindex $n_d$ von 1,65 bis 1,75 und eine Abbe-Zahl $\nu_d$ von nicht weniger als 50 hat.

3. Verfahren zum Formen einer optischen Linse nach Anspruch 1 oder 2, wobei die optische Linse eine Fließpunkttemperatur von nicht höher als 560°C hat.

4. Verfahren zum Formen einer optischen Linse, welches das Erhitzen von optischem Glas zu einem erweichten Zustand und das Formen des erweichten optischen Glases in eine optische Linse durch Präzisions-Formpreßverfahren umfaßt, wobei das optische Glas die folgenden Bestandteile in den folgenden Mengen enthält:

| Bestandteile | Gehalt (Gew.-%) |
|---|---|
| SiO$_2$ | 5 bis 20 |
| B$_2$O$_3$ | 20 bis 35 |
| mit der Maßgabe, daß SiO$_2$ + B$_2$O$_3$ = 30 bis 45 | |
| Li$_2$O | 2 bis 7 |
| Na$_2$O | 0 bis 5 |
| K$_2$O | 0 bis 5 |
| Cs$_2$O | 0 bis 5 |
| mit der Maßgabe, daß Na$_2$O + K$_2$O + Cs$_2$O = 0 bis 10 | |
| MgO | 0 bis 5 |
| CaO | 0 bis 15 |
| SrO | 0 bis 15 |
| BaO | 0 bis 15 |
| ZnO | 2 bis 12 |
| mit der Maßgabe, daß CaO + SrO + BaO + ZnO = 5 bis 20 | |
| Al$_2$O$_3$ | 0 bis 10 |
| ZrO$_2$ | 1 bis 10 |
| La$_2$O$_3$ | 25 bis 35 |
| mit der Maßgabe, daß SiO$_2$ + ZrO$_2$ = 10 bis 25 | |

5. Verfahren nach einem der Ansprüche 1 bis 4, welches das Formpressen des Glases bei einer Temperatur von nicht mehr als 600°C umfaßt.

6. Verfahren nach Anspruch 5, wobei das verwendete Formteil eine Oberflächenrauhigkeit Rmax von 0,01 μm oder weniger hat.

**Revendications**

1. Procédé de formation d'une lentille optique, qui comprend les étapes consistant à chauffer le verre optique jusqu'à un état ramolli et former le verre ramolli en une lentille optique par moulage par pression de précision, dans lequel le verre optique comprend les composés suivants dans les quantités suivantes

| Composants | Teneur (% en poids) |
|---|---|
| $SiO_2$ | 5 à 25 |
| $B_2O_3$ | 16 à 40 |
| dans la mesure où $SiO_2 + B_2O_3$ = 30 à 50 | |
| $Li_2O$ | 2 à 8 |
| $Na_2O$ | 0 à 10 |
| $K_2O$ | 0 à 10 |
| $Cs_2O$ | 0 à 10 |
| dans la mesure où $Na_2O + K_2O + Cs_2O$ = 0 à 15 | |
| MgO | 0 à 10 |
| CaO | 0 à 30 |
| SrO | 0 à 30 |
| BaO | 0 à 20 |
| ZnO | 1 à 20 |
| dans la mesure où CaO + SrO + BaO + ZnO = 5 à 40 | |
| $Al_2O_3$ | 0 à 10 |
| $ZrO_2$ | 0,5 à 15 |
| $La_2O_3$ | 22 à 40 |

2. Procédé de formation d'une lentille optique selon la revendication 1, dans lequel la lentille optique a des constantes optiques d'un indice de réfraction $n_d$ compris entre 1,65 et 1,75 et d'un nombre d'Abbé $v_d$ non inférieur à 50.

3. Procédé de formation d'une lentille selon la revendication 1 ou 2, dans lequel la lentille optique a une température de limite élastique n'excédant pas 560°C.

4. Procédé de formation d'une lentille optique qui comprend les étapes consistant à chauffer le verre optique jusqu'à un état ramolli et à former le verre optique ramolli en une lentille optique par moulage par pression de précision, dans lequel le verre optique comprend les composants suivants dans les quantités suivantes

| Composants | Teneur (% en poids) |
|---|---|
| $SiO_2$ | 5 à 20 |
| $B_2O_3$ | 20 à 35 |
| dans la mesure où $SiO_2 + B_2O_3 = 30$ à 45 | |
| $Li_2O$ | 2 à 7 |
| $Na_2O$ | 0 à 5 |
| $K_2O$ | 0 à 5 |
| $Cs_2O$ | 0 à 5 |
| dans la mesure où $Na_2O + K_2O + Cs_2O = 0$ à 10 | |
| MgO | 0 à 5 |
| CaO | 0 à 15 |
| SrO | 0 à 15 |
| BaO | 0 à 15 |
| ZnO | 2 à 12 |
| dans la mesure où $CaO + SrO + BaO + ZnO = 5$ à 20 | |
| $Al_2O_3$ | 0 à 10 |
| $ZrO_2$ | 1 à 10 |
| $La_2O_3$ | 25 à 35 |

5. Procédé selon l'une quelconque des revendications 1 à 4, qui comprend le moulage par pression du verre à une température n'excédant pas 600°C.

6. Procédé selon la revendication 5, dans lequel le moulage employé a une rugosité de surface R maximale de 0,01 $\mu$m ou moins.

# FIG. 1

# FIG. 2

# FIG. 3